# EUROPÄISCHE PATENTSCHRIFT

(11) **EP 3 198 156 B1**
(45) Veröffentlichungstag und Bekanntmachung des Hinweises auf die Patenterteilung: **18.09.2019**
(21) Anmeldenummer: 15741137.2
(22) Anmeldetag: 13.07.2015
(51) Int. Cl.: F16C 17/14, B63H 23/32, F16C 33/20, F16C 29/02, F16C 3/02

(54) **AUSSENBORDVORRICHTUNG UND VERFAHREN ZUM BESCHICHTEN EINER AUSSENBORDVORRICHTUNG**
OUTBOARD DEVICE AND METHOD FOR COATING AN OUTBOARD DEVICE
DISPOSITIF HORS-BORD ET PROCÉDÉ POUR MUNIR UN DISPOSITIF HORS-BORD D'UN REVÊTEMENT

(30) Priorität: 26.09.2014 DE 102014113971
(43) Veröffentlichungstag der Anmeldung: 02.08.2017
(73) Patentinhaber: ThyssenKrupp Marine Systems GmbH, 24143 Kiel (DE); thyssenkrupp AG, 45143 Essen (DE)
(72) Erfinder: STOLTENBERG, Burkhard, 24248 Mönkeberg (DE); RUDEL, Michael, 24159 Kiel (DE); VÖGE, Thomas, 24235 Laboe (DE); BAUER, Wilhelm, 27711 Osterholz-Scharmbeck (DE); KRISTANN, Andreas, 28307 Bremen (DE); BARG, Ulrich, 28279 Bremen (DE)
(74) Vertreter: thyssenkrupp Intellectual Property GmbH
(86) Internationale Anmeldenummer: PCT/EP2015/065957
(87) Internationale Veröffentlichungsnummer: WO 2016/045809

(56) Entgegenhaltungen:
- EP-A1- 2 743 521
- GB-A- 1 014 145

## Beschreibung

### Stand der Technik

Die vorliegende Erfindung betrifft eine Außenbordvorrichtung und ein Verfahren zum Beschichten einer Außenbordvorrichtung, die vorzugsweise an der Außenhaut einer meerestechnischen Konstruktion, wie beispielsweise einem U-Boot oder einem Schiff, vorzugsweise an dessen Rumpf, zu finden ist. Insbesondere betrifft die vorliegende Erfindung die Außenbordvorrichtungen, die von Wasser, vorzugsweise Salzwasser, zumindest teilweise umspült werden.

Eine typische Außenbordvorrichtung ist ein Gleitlager, beispielsweise integriert in eine Linearführung, die an der Außenhaut der meerestechnischen Konstruktion angebracht ist. Die bei einem Gleitlager zueinander beweglich gelagerten Bauteile müssen dabei den gehobenen Anforderungen genügen, die sich durch den Einsatz im Wasser, insbesondere im Meerwasser bzw. Salzwasser, ergeben. Der Stand der Technik kennt dabei Gleitlagerpaare, d. h. ein Paar aus zueinander beweglichen Bauteilen, bei denen eine Werkstoffkombination aus einem rostfreien Stahl und einem Bronzewerkstoff im Zusammenspiel mit einer Fettschmierung verwendet wird. Die äußeren Umstände machen es dann immer wieder erforderlich, dass die Fettschmierung in regelmäßigen Abständen aufwendig ausgetauscht werden muss.

Für eine kalte Umgebungstemperatur hat es sich etabliert, den Bronzewerkstoff für das Lager durch ein Kunststoff-Gewebelager oder einen Verbund aus Kunststofflaufschichten zu ersetzen. Beispielsweise beschreibt die GB 1 014 145 A eine Wellenlagerung für eine Außenbordvorrichtung an der Unterseite eines Boots. Bei dieser Wellenlagerung ist eine Propellerwelle in einem Einsatz gelagert, der eine Beschichtung aus einem fluorierten Polymer, beispielsweise aus Teflon, aufweist. Allerdings treten einige nachteilige Effekte auf, sobald sich ein Gleitlager mit der genannten Werkstoffkombination im warmen Wasser aufhält. Zum einen bildet sich eine dünne Kalkschicht auf blanken Metalloberflächen aus und zum anderen werden die blanken Metalloberflächen in kürzester Zeit von Meeresorganismen besiedelt. In Folge dieser Ablagerungen wird die Reibung zwischen den Bauteilen des Gleitlagers vergrößert und letztendlich besteht sogar die Gefahr, dass das Gleitlager verklemmt und dadurch dessen Funktionalität nicht mehr sichergestellt werden kann. Trotz dieser Nachteile lässt sich jedoch typischerweise nicht auf blanke Metalloberflächen verzichten, da sie in der Regel aus Gründen der Statik und Festigkeit anderen Werkstoffen überlegen sind.

Um die Korrosion solcher Metalloberflächen zu verhindern, schlägt die EP 2 743 521 A1 ein Gleitlager für eine Welle zur Anwendung unter Wasser vor, bei welchem die Welle in einem Bauteil gelagert ist, welches eine Gleitschicht aus einem Faserverbundwerkstoff aufweist. Dieser Faserverbundwerkstoff enthält ein Harz, beispielsweise ein Tetrafluorethylenharz und Kohlenstofffasern. Unterhalb dieser Gleitschicht ist eine Korrosionsverhinderungsschicht aus einem elektrisch isolierenden Material vorgesehen. Allerdings können sich auf der Welle dennoch Ablagerungen von Meeresorganismen bilden.

### Offenbarung der Erfindung

Es ist eine Aufgabe der vorliegenden Erfindung, eine Außenbordvorrichtung zur Verfügung zu stellen, die in einem nicht-fettgeschmierten Zustand und bei dauerhafter Nutzung im Wasser, insbesondere Seewasser, zuverlässig funktioniert.

Die Aufgabe der vorliegenden Erfindung wird gelöst durch eine Außenbordvorrichtung für eine meerestechnische Konstruktion, wobei die Außenbordvorrichtung ein erstes Bauteil und ein zweites Bauteil aufweist, wobei das erste Bauteil relativ zum zweiten Bauteil bewegbar ist, wobei zwischen dem ersten Bauteil und dem zweiten Bauteil als Beschichtung ein Thermoplast zum Schutz vor Ablagerungen angeordnet ist.

Gegenüber dem Stand der Technik hat die vorliegende Erfindung den Vorteil, dass der Thermoplast dafür sorgt, dass sich auf einer an das Wasser angrenzenden Oberfläche des ersten und/oder zweiten Bauteils keine Ablagerungen, beispielsweise in Form von Kalk oder Mikroorganismen, anlagern. Zudem erlaubt es der Thermoplast, dass Werkstoffe für das erste Bauteil und das zweite Bauteil gewählt werden können, die andernfalls aus Gründen der Funktionssicherheit oder Stabilität nicht in Betracht kämen. Weiterhin lassen sich die Werkstoffe für das erste und das zweite Bauteil derart auswählen, dass auf eine Fettschmierung verzichtet werden kann. Insbesondere verhindert der Thermoplast das Ablagern, wenn sich die Außenbordvorrichtung im warmen Salzwasser befindet.

Vorzugsweise ist die Außenbordvorrichtung an einer Außenhaut einer meerestechnischen Konstruktion angebracht oder in die Außenhaut zumindest teilweise integriert. Beispielsweise ist die meerestechnische Konstruktion ein U-Boot, beispielsweise dessen Oberdeck oder Außenschiff, ein Schiff, insbesondere dessen Rumpf, oder eine Plattform, wie beispielsweise eine Offshore-Plattform, oder eine im Meer angeordnete Windkraftanlage. Es ist dabei vorgesehen, dass die Außenbordvorrichtung bei der Nutzung der meerestechnischen Konstruktion zumindest teilweise von Wasser, insbesondere von Salzwasser, umspült wird. Insbesondere ist die Außenbordvorrichtung derart an der meerestechnischen Konstruktion angebracht, dass die Außenbordvorrichtung dauerhaft, möglicherweise mit vergleichsweise kurzen Unterbrechungen, dem Wasser ausgesetzt ist. Thermoplastische Materialien lassen sich zudem in vorteilhafter Weise mechanisch und thermisch behandeln, wodurch die Beschichtung mit dem Thermoplast möglichst flächig und gezielt aufgetragen werden kann. Es ist dabei auch vorstellbar, dass die Beschichtung mit dem Thermoplast nachträglich, d. h. nachdem die Außenbordvorrichtung an der meerestechnischen Konstruktion angebracht wurde, aufgetragen wird. Dadurch können Außenbordvorrichtungen, die bereits an einer meerestechnischen Konstruktion angebracht sind, durch die Beschichtung aufgewertet werden.

Vorteilhafte Ausgestaltungen und Weiterbildungen der Erfindung sind den Unteransprüchen sowie der Beschreibung unter Bezugnahme auf die Zeichnungen entnehmbar.

Gemäß einer weiteren Ausführungsform der vorliegenden Erfindung ist es vorgesehen, dass das erste Bauteil entlang einer Gleitfläche des zweiten Bauteils bewegbar ist, wobei der Thermoplast auf der Gleitfläche des zweiten Bauteils aufgetragen ist. Vorzugsweise bedeckt der Thermoplast die gesamte Gleitfläche des zweiten Bauteils. Dabei ist es vorstellbar, dass die Gleitfläche des zweiten Bauteils größer ist als eine Gleitfläche des ersten Bauteils, wodurch die Gleitfläche des ersten Bauteils zumindest teilweise dem Wasser ausgesetzt ist, insbesondere wenn das zweite Bauteil gegenüber dem ersten Bauteil zeitweise positionsfest angeordnet ist. Durch den Thermoplast wird in vorteilhafter Weise die Gleitfläche des zweiten Bauteils, die maßgeblich ist für die Funktionstüchtigkeit der Außenbordvorrichtung, geschützt. Weiterhin sind die Gleitflächen des ersten Bauteils und des zweiten Bauteils einander gegenüber gelegen und werden vorzugsweise lediglich durch den Thermoplast voneinander getrennt. Bei dem Thermoplast kann es sich insbesondere um eine Schicht oder ein Schichtsystem handeln, wobei die Schicht bzw. das Schichtsystem überwiegend aus einem teilfluorierten Polymer oder einem fluoriertem Polymer, insbesondere einem (teil-)fluorierten Polyamid, einem (teil-)fluorierten Polyolefin oder einem (teil-)fluorierten Polyamid-Polyolefin-Copolymer, gebildet wird. Die Schicht oder das Schichtsystem wird vorzugsweise mittels Wirbelsintern oder einem elektrostatischen Pulververfahren aufgebracht.
Der Thermoplast vereint damit die chemische Widerstandfähigkeit als auch die positive mechanische Festigkeit unter abrasiven Bedingung.

Gemäß einer weiteren Ausführungsform der vorliegenden Erfindung ist es vorgesehen, dass eine Gleitfläche des ersten Bauteils an dem Thermoplast anliegt. Insbesondere ist es vorgesehen, dass der Thermoplast nur auf einem der beiden relativ zueinander bewegbaren Bauteile angeordnet ist. Dadurch lässt sich der Werkstoff für das erste Bauteil so wählen, dass beispielsweise die statische Funktionalität vom ersten Bauteil gesichert wird, wohingegen der Werkstoff des zweiten Bauteils beispielsweise für eine optimale Gleitbewegung der beiden Bauteile ausgewählt werden kann. Insbesondere kann vorgesehen sein, dass das erste Bauteil im Bereich der Gleitfläche zumindest teilweise eine Kunststoffoberfläche, Dünnfilmbeschichtung oder ein Kunststoff-Gewebelager aufweist. Dadurch lässt sich eine besonders vorteilhafte Werkstoffkombination wählen.

Gemäß einer weiteren Ausführungsform der vorliegenden Erfindung ist es vorgesehen, dass das erste Bauteil und/oder das zweite Bauteil zumindest teilweise eine glatte Oberfläche aufweisen. Vorzugsweise bilden die glatten Oberflächen jeweils die Gleitfläche des ersten und des zweiten Bauteils. Durch die glatten Oberflächen lassen sich die Bauteile vorzugsweise reibungsreduziert zueinander bewegen. Eine Ablagerung auf diesen glatten Oberflächen könnte die Reibung zwischen den beiden relativ zueinander bewegbaren Bauteilen erhöhen, bis sogar eine Bewegungsfunktionalität, d. h. die Fähigkeit, sich relativ zueinander zu bewegen, gefährdet ist. Durch eine Beschichtung mit dem Thermoplast auf den glatten Oberflächen lässt sich daher eine reibungsreduzierte Bewegung des ersten Bauteils gegenüber dem zweiten Bauteil erhalten.

Gemäß einer weiteren Ausführungsform der vorliegenden Erfindung ist es vorgesehen, dass der Thermoplast vorzugsweise eine Dicke von weniger als 1 mm, bevorzugt weniger als 0,8 mm und besonders bevorzugt eine Dicke zwischen 0,1 und 0,6 mm aufweist. Durch solch dünne Beschichtungen mit dem Thermoplast wird in vorteilhafter Weise vermieden, dass die Beschichtung die Relativbewegung des ersten Bauteils gegenüber dem zweiten Bauteil beeinträchtigt.

Gemäß einer weiteren Ausführungsform der vorliegenden Erfindung ist es vorgesehen, dass der Thermoplast eine Härte von vorzugsweise mehr als 50 Shore D, bevorzugt mehr als 65 Shore D und besonders bevorzugt mehr als 70 Shore D aufweist. Gemäß einer weiteren Ausführungsform der vorliegenden Erfindung ist es vorgesehen, dass der Thermoplast eine Härte von vorzugsweise weniger als 100 Shore D, bevorzugt weniger als 90 Shore D und besonders bevorzugt weniger als 85 Shore D aufweist.

Gemäß einer weiteren Ausführungsform der vorliegenden Erfindung ist es vorgesehen, dass der Thermoplast zumindest teilweise geschlossen-porig und/oder elektrisch isolierend ist. Mit einem geschlossenporigen Thermoplast lässt sich eine Oberfläche realisieren, an der sich keine unerwünschten Schichten oder Beläge, die die Funktionalität der Außenbordvorrichtung stören könnten, ablagern. Der elektrisch isolierende Thermoplast kann in vorteilhafter Weise ungewollte elektrolytische Effekte vermeiden.

Gemäß der vorliegenden Erfindung ist es vorgesehen, dass die Außenbordvorrichtung ein Gleitlager aufweist. Insbesondere bildet das zweite Bauteil ein Gleitlager, in dem das erste Bauteil gelagert ist. Beispielsweise ist das erste Bauteil eine Führungsstange, die vom zweiten Bauteil mit einem Gleitlager umschlossen wird, wobei sich die Führungsstange längs ihrer Längsachse im Gleitlager, bevorzugt gleitend, bewegen lässt. Weiterhin ist es vorgesehen, dass eine Innenseite des Gleitlagers, d. h. des ersten Bauteils, das das zweite Bauteil ummantelt, zumindest teilweise die Gleitfläche des ersten Bauteils bildet und eine Außenfläche der Führungsstange zumindest teilweise die Gleitfläche des zweiten Bauteils bildet.

Gemäß der vorliegenden Erfindung ist es vorgesehen, dass das Gleitlager eine Komponente aus einem Faserverbundwerkstoff aufweist. Durch die Verwendung des Faserverbundwerkstoffs lässt sich in vorteilhafter Weise auf eine Fettschmierung verzichten, die in regelmäßigen Abständen gewechselt werden müsste. Gemäß der Erfindung ist es vorgesehen, dass auf einem der Bauteile der Thermoplast aufgetragen ist und das andere der Bauteile die Komponente aus dem Faserverbundwerkstoff aufweist. Beispielsweise ist das zweite Bauteil beschichtet und das erste Bauteil umfasst eine Komponente aus dem Faserverbundwerkstoff bzw. ist aus dem Faserverbundwerkstoff gefertigt. Insbesondere lässt sich durch die Beschichtung mit dem Thermoplasten des zweiten Bauteils dafür sorgen, dass sich der Werkstoff, aus dem das erste Bauteil gefertigt ist, vergleichsweise flexibel an bestehende Anforderungen anpassen lässt, da beispielsweise eine getroffene Werkstoffwahl des ersten Bauteils bereits die gewünschte statische Sicherheit der Außenbordvorrichtung sichert und entsprechend die Wahl des Werkstoffs für das zweite Bauteil ungeachtet dieser Anforderung ausgewählt werden kann.

Gemäß einer weiteren Ausführungsform der vorliegenden Erfindung ist es vorgesehen, dass der Faserverbund eine Matrix aus einem duroplastischen Harz und einem eingelagerten weiteren Schmierstoff, insbesondere einem Festschmierstoff, aufweist. Der Festschmierstoff kann insbesondere Molybdändisulfid und Polytetraflourethylen oder ein Gemisch davon sein.

Gemäß einer weiteren Ausführungsform der vorliegenden Erfindung ist es vorgesehen, dass das Gleitlager zumindest teilweise aus einem Werkstoff mit einer Härte gefertigt ist, die größer als 50 HRM Rockwell, vorzugsweise größer als 65 HRM Rockwell und besonders bevorzugt größer als 80 HRM Rockwell ist. Gemäß einer weiteren Ausführungsform der vorliegenden Erfindung ist es vorgesehen, dass das Gleitlager zumindest teilweise aus einem Werkstoff mit einer Härte gefertigt ist, die kleiner als 130 HRM Rockwell, vorzugsweise kleiner als 120 HRM Rockwell und besonders bevorzugt kleiner als 115 HRM Rockwell ist.

Gemäß einer weiteren Ausführungsform der vorliegenden Erfindung ist es vorgesehen, dass die Außenbordvorrichtung eine Winde umfasst. Insbesondere bilden das erste Bauteil und das zweite Bauteil zueinander bewegbare Komponenten, die die Funktionalität der Winde auch bei dauerhafter Nutzung in Wasser, auch im warmen Salzwasser, sicherstellt.

Ein weiterer Gegenstand der vorliegenden Erfindung ist ein Verfahren zum Beschichten einer Außenbordvorrichtung gemäß einem der vorhergehenden Ansprüche, , wobei in einem Verfahrensschritt a die Außenbordvorrichtung zumindest teilweise derart beschichtet wird, dass der Thermoplast zwischen dem ersten Bauteil und dem zweiten Bauteil angeordnet wird. Insbesondere wird die Beschichtung mit dem Thermoplast entlang einer Gleitfläche vorgenommen, entlang der sich das erste bzw. das zweite Bauteil bewegt.

Dadurch lassen sich die erfindungsgemäßen und vorteilhaften Außenbordvorrichtungen auch dann realisieren, wenn die Außenbordvorrichtung bereits an der meerestechnischen Konstruktion angebracht ist und die positive Wirkung durch eine nachträgliche, d. h. zeitlich nach dem Anbringen erfolgende Beschichtung mit dem Thermopolast erfolgt.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt eine Außenbordvorrichtung gemäß einer ersten beispielhaften Ausführungsform der vorliegenden Erfindung.
Die **Figur 2** zeigt eine Außenbordvorrichtung gemäß einer zweiten beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

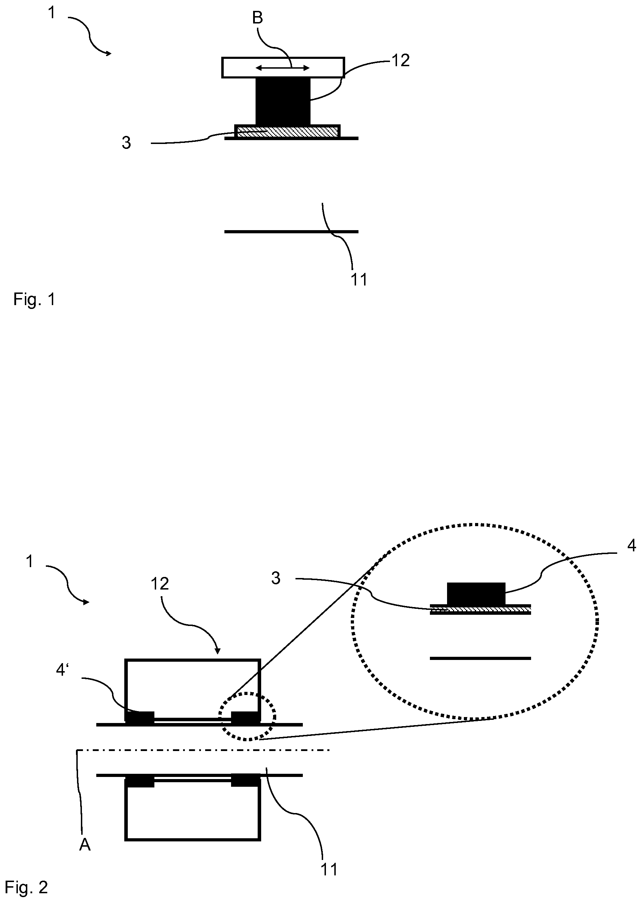

In **Figur 1** ist in einer Schnittansicht eine Außenbordvorrichtung 1 gemäß einer ersten beispielhaften Ausführungsform der vorliegenden Erfindung dargestellt. Es ist dabei vorgesehen, dass die Außenbordvorrichtung 1 an einer Außenhaut einer meerestechnischen Konstruktion angebracht oder in die Außenhaut einer meerestechnischen Konstruktion integriert ist. Beispielsweise handelt es sich bei der meerestechnischen Konstruktion um ein U-Boot, ein Schiff, insbesondere dessen Rumpf, oder eine Plattform und die Außenbordvorrichtung 1 ist beispielsweise eine Winde. Die meerestechnische Konstruktion liegt dabei zumindest teilweise in Wasser, insbesondere in Salzwasser, und die Außenbordvorrichtung 1 wird zumindest teilweise von Wasser, insbesondere Salzwasser, umspült. Insbesondere umfasst die Außenbordvorrichtung 1 ein erstes Bauteil 11 und ein zweites Bauteil 12, wobei das erste Bauteil 11 relativ zum zweiten Bauteil 12 entlang einer Bewegungsrichtung B bewegbar ist. Vorzugsweise ist das zweite Bauteil 12 dabei beweglich an der meerestechnischen Konstruktion angeordnet bzw. in diese integriert. Weiterhin ist es vorgesehen, dass das erste Bauteil 11 entlang einer Gleitfläche relativ zum zweiten Bauteils 12 bewegbar ist. Dabei ist es vorstellbar, dass die Gleitfläche des ersten Bauteils 11 größer ist als eine Gleitfläche des zweiten Bauteils 12. Im Einsatz der Außenbordvorrichtung, d. h. beim permanenten oder zeitweisen Umspülen der Außenbordvorrichtung 1 mit Wasser, steht zumindest die Gleitfläche des ersten Bauteils 11 in einem dauerhaften Kontakt mit Wasser. Um Ablagerungen an der Gleitfläche des zweiten und/oder ersten Bauteils 12 und/oder 11 zu unterdrücken, ist eine Beschichtung mit einem Thermoplast 3 vorgesehen, wobei die Beschichtung zwischen dem ersten Bauteil 11 und dem zweiten Bauteil 12 angeordnet ist. Das zweite Bauteil bewegt sich dabei auf dem Thermoplast 3 entlang. Insbesondere bedeckt der Thermoplast 3 die, vorzugsweise gesamte, Gleitfläche des ersten Bauteils 11. Es ist dabei vorstellbar, dass das erste Bauteil 11 aus einem metallischen Werkstoff gebildet ist. Um zu vermeiden, dass eine für Ablagerungen anfällige Metalloberfläche dauerhaft in Kontakt mit dem Wasser steht, ist das erste Bauteil 11, insbesondere entlang dessen Gleitfläche, mit dem Thermoplast 3 versehen. Weiterhin ist es vorzugsweise vorgesehen, dass die Beschichtung ein Elastomer aufweist bzw. eine polyamid-basierte Beschichtung ist. Um die Funktionalität der zueinander bewegbaren Bauteile nicht einzuschränken, ist es vorgesehen, dass die Beschichtung mit dem Thermoplast 3 entlang einer senkrecht zur Gleitfläche verlaufenden Richtung dünner ist als 1 mm, vorzugsweise dünner ist als 0,8 mm und besonders bevorzugt zwischen 0,1 und 0,6 mm dick ist. Weiterhin ist es vorgesehen, dass der Thermoplast eine Härte eine Härte von vorzugsweise mehr als 50 Shore D, bevorzugt mehr als 65 Shore D und besonders bevorzugt mehr als 70 Shore D aufweist. Weiterhin ist es vorgesehen, dass der Thermoplast eine Härte von vorzugsweise weniger als 100 Shore D, bevorzugt weniger als 90 Shore D und besonders bevorzugt weniger als 85 Shore D aufweist.. Durch eine geschlossen-porige und elektrisch isolierende Beschichtung mit dem Thermoplast 3 lässt sich vermeiden, dass sich auf der Gleitfläche unerwünschte Schichten oder Beläge, beispielsweise aus Kalk oder Mikroorganismen, ablagern und durch die Fähigkeit der elektrischen Isolation lassen sich in vorteilhafter Weise elektrolytische Effekte unterbinden. Ein weiterer Vorteil ist, dass durch die Beschichtung mit dem Thermoplast 3 eine statische Funktionalität der Außenbordvorrichtung von der Bewegungsfunktionalität des ersten Bauteils 11 gegenüber dem zweiten Bauteil 12 getrennt wird. Infolgedessen ist man flexibler in der Wahl der Werkstoffe für das erste und das zweite Bauteil 11 und 12, d. h. deren Werkstoffkombination. Beispielsweise ist es vorstellbar, dass das zweite Bauteil 12 einen Faserverbundstoff, beispielsweise auf Basis einer Matrix aus einem duroplastischen Harz mit einem eingelagerten Festschmierstoff, aufweist. Durch die flexiblere Wahl der Werkstoffkombination lässt sich die Funktionalität der Außenbordvorrichtung 1 möglichst optimal an die gewünschten Anforderungen anpassen, ohne befürchten zu müssen, dass eine auf Dauer ausgerichtete Zuverlässigkeit beeinträchtigt wird. Es ist dem Fachmann klar, dass das erste Bauteil 11 und das zweite Bauteil 12 austauschbar sind, d. h., dass das erste Bauteil 11 aus einem duroplastischen Harz mit einem eingelagerten Festschmierstoff besteht und das zweite Bauteil 12 mit dem Thermoplast beschichtet ist. In diesem Fall wäre die thermoplastische Beschichtung auf die Breite des zweiten Bauteils 12 beschränkt und die Bewegung würde zwischen dem ersten Bauteil 11 und dem Thermoplast 3 stattfinden.

In **Figur 2** ist eine Außenbordvorrichtung 1 gemäß einer zweiten Ausführungsform der vorliegenden Erfindung dargestellt. Die Außenbordvorrichtung 1 der zweiten Ausführungsform ergänzt die der ersten Ausführungsform dadurch, dass die Außenbordvorrichtung 1 in der zweiten Ausführungsform mindestens ein Gleitlager 4 umfasst. Beispielhaft zeigt Figur 2 zwei Gleitlager 4, 4'. Im weiteren wird nur auf ein Gleitlager eingegangen. Es ist dabei vorgesehen, dass eine Führungsstange, vorzugsweise aus Stahl, in dem Gleitlager 4, vorzugsweise in einem Kunststoffverbundlager, gelagert ist. Es ist dabei vorstellbar, dass sich das Gleitlager oder die Führungsstange entlang einer Längsachse A der Führungsstange bewegen lässt. Die Führungsstange ist dabei zumindest über den Bewegungsweg des Gleitlagers 4 mit einem Thermoplast 3 beschichtet. Beispielsweise handelt es sich bei der Außenbordvorrichtung 1 um eine Linearführung, die an einem Außenschiff eines U-Boots angebracht ist. Weiterhin ist es vorgesehen, dass das Kunststoffverbundlager aus einem Werkstoff mit einer Härte von mehr als 50 HRM Rockwell, vorzugsweise mehr als 65 HRM Rockwell und besonders bevorzugt mit einer Härte von mehr als 80 HRM Rockwell , gefertigt ist. Weiterhin ist es vorgesehen, dass das Kunststoffverbundlager aus einem Werkstoff mit einer Härte von weniger als 130 HRM Rockwell, vorzugsweise weniger als 120 HRM Rockwell und besonders bevorzugt mit einer Härte von weniger als 115 HRM Rockwell , gefertigt ist.

### Bezugszeichenliste

- 1: Außenbordvorrichtung
- 3: Thermoplast
- 4: Gleitlager
- 11: erstes Bauteil
- 12: zweites Bauteil
- A: Längsachse
- B: Bewegungsrichtung

## Patentansprüche

1. Außenbordvorrichtung (1) für eine meerestechnische Konstruktion, wobei die Außenbordvorrichtung (1) ein erstes Bauteil (11) und ein zweites Bauteil (12) aufweist, wobei das erste Bauteil (11) und das zweite Bauteil (12) zumindest zeitweise mit Wasser bedeckt sind und wobei das erste Bauteil (11) relativ zum zweiten Bauteil (12) bewegbar ist, wobei zwischen dem ersten Bauteil (11) und dem zweiten Bauteil (12) als Beschichtung ein Thermoplast (3) angeordnet ist, wobei die Außenbordvorrichtung (1) ein Gleitlager (4) aufweist, das eine Komponente aus einem Faserverbundwerkstoff umfasst,
**dadurch gekennzeichnet, dass**
auf einem der Bauteile (11, 12) der Thermoplast aufgetragen ist und das andere der Bauteile (11, 12) die Komponente aus dem Faserverbundwerkstoff aufweist.

2. Außenbordvorrichtung (1) gemäß Anspruch 1, wobei das erste Bauteil (11) entlang einer Gleitfläche des zweiten Bauteils (12) bewegbar ist, wobei der Thermoplast (3) auf der Gleitfläche des zweiten Bauteils (12) aufgetragen ist.

3. Außenbordvorrichtung (1) gemäß Anspruch 2, wobei eine Gleitfläche des ersten Bauteils (11) an dem Thermoplast (3) anliegt.

4. Außenbordvorrichtung (1) gemäß einem der vorhergehenden Ansprüche, wobei das erste Bauteil (11) und/oder das zweite Bauteil (12) zumindest teilweise eine glatte Oberfläche aufweisen.

5. Außenbordvorrichtung (1) gemäß einem der vorhergehenden Ansprüche, wobei der Thermoplast (3) vorzugsweise eine Dicke von weniger als 1 mm, bevorzugt weniger als 0,8 mm und besonders bevorzugt eine Dicke zwischen 0,1 und 0,6 mm aufweist.

6. Außenbordvorrichtung (1) gemäß einem der vorhergehenden Ansprüche, wobei der Thermoplast (3) eine Härte von vorzugsweise mehr als 50 Shore D, bevorzugt mehr als 65 Shore D und besonders bevorzugt mehr als 70 Shore D aufweist und wobei der Thermoplast (3) eine Härte von vorzugsweise weniger als 100 Shore D, bevorzugt weniger als 90 Shore D und besonders bevorzugt weniger als 85 Shore D aufweist

7. Außenbordvorrichtung (1) gemäß einem der vorhergehenden Ansprüche, wobei der Thermoplast (3) zumindest teilweise geschlossen-porig und/oder elektrisch isolierend ist.

8. Außenbordvorrichtung (1) gemäß einem der vorhergehenden Ansprüche, wobei das zweite Bauteil (12) mit dem Thermoplast (3) beschichtet ist, wobei das erste Bauteil (11) die Komponente aus dem Faserverbundwerkstoff umfasst oder das erste Bauteil aus dem Faserverbundwerkstoff gefertigt ist.

9. Außenbordvorrichtung (1) gemäß einem der vorhergehenden Ansprüche, wobei der Faserverbund eine Matrix aus einem duroplastischen Harz und einen eingelagerten Festschmierstoff aufweist.

10. Außenbordvorrichtung (1) gemäß einem der vorhergehenden Ansprüche, wobei das Gleitlager (4) zumindest teilweise aus einem Werkstoff mit einer Härte gefertigt ist, die größer als 50 HRM Rockwell, vorzugsweise größer als 65 HRM Rockwell und besonders bevorzugt größer als 80 HRM Rockwell ist, und wobei die Härte die kleiner als 130 HRM Rockwell, vorzugsweise kleiner als 120 HRM Rockwell und besonders bevorzugt kleiner als 115 HRM Rockwell ist .

11. Außenbordvorrichtung (1) gemäß einem der vorhergehenden Ansprüche, wobei die Außenbordvorrichtung (1) eine Winde umfasst.

12. Verfahren zum Beschichten einer Außenbordvorrichtung (1) gemäß einem der vorhergehenden Ansprüche, wobei in einem Verfahrensschritt a die Außenbordvorrichtung (1) zumindest teilweise derart beschichtet wird, dass der Thermoplast (3) zwischen dem ersten Bauteil (11) und dem zweiten Bauteil (12) angeordnet wird.

## Claims

1. Outboard device (1) for a maritime structure, wherein the outboard device (1) comprises a first component (11) and a second component (12), wherein the first component (11) and the second component (12) are at least temporarily covered by water and wherein the first component (11) is movable in relation to the second component (12), wherein a thermoplastic (3) is arranged as a coating between the first component (11) and the second component (12), wherein the outboard device (1) comprises a sliding bearing (4), which comprises an element made of a fibre composite material,
**characterized in that**
the thermoplastic is applied on one of the components (11, 12) and the other of the components (11, 12) comprises the element made of the fibre composite material.

2. Outboard device (1) according to Claim 1, wherein the first component (11) is movable along a sliding surface of the second component (12), wherein the thermoplastic (3) is applied on the sliding surface of the second component (12).

3. Outboard device (1) according to Claim 2, wherein a sliding surface of the first component (11) lies against the thermoplastic (3).

4. Outboard device (1) according to one of the preceding claims, wherein the first component (11) and/or the second component (12) at least partially has/have a smooth surface.

5. Outboard device (1) according to one of the preceding claims, wherein the thermoplastic (3) preferably has a thickness of less than 1 mm, with preference less than 0.8 mm and with particular preference a thickness of between 0.1 and 0.6 mm.

6. Outboard device (1) according to one of the preceding claims, wherein the thermoplastic (3) has a hardness of preferably more than 50 Shore D, with preference more than 65 Shore D and with particular preference more than 70 Shore D and wherein the thermoplastic (3) has a hardness of preferably less than 100 Shore D, with preference less than 90 Shore D and with particular preference less than 85 Shore D.

7. Outboard device (1) according to one of the preceding claims, wherein the thermoplastic (3) is at least partially closed-cell and/or electrically insulating.

8. Outboard device (1) according to one of the preceding claims, wherein the second component (12) is coated with the thermoplastic (3), wherein the first component (11) comprises the element made of the fibre composite material or the first component is produced from the fibre composite material.

9. Outboard device (1) according to one of the preceding claims, wherein the fibre composite comprises a matrix of a thermoplastic resin and an incorporated solid lubricant.

10. Outboard device (1) according to one of the preceding claims, wherein the sliding bearing (4) is at least partially produced from a material with a hardness that is greater than 50 HRM Rockwell, preferably greater than 65 HRM Rockwell and with particular preference greater than 80 HRM Rockwell, and wherein the hardness is less than 130 HRM Rockwell, preferably less than 120 HRM Rockwell and with particular preference less than 115 HRM Rockwell.

11. Outboard device (1) according to one of the preceding claims, wherein the outboard device (1) comprises a winch.

12. Method for coating an outboard device (1) according to one of the preceding claims, wherein, in a method step a, the outboard device (1) is at least partially coated in such a way that the thermoplastic (3) is arranged between the first component (11) and the second component (12).

## Revendications

1. Dispositif de bordage extérieur (1) destiné à une construction navale, le dispositif de bordage extérieur (1) comportant un premier composant (11) et un deuxième composant (12), le premier composant (11) et le deuxième composant (12) étant au moins temporairement recouverts d'eau et le premier composant (11) étant mobile par rapport au deuxième composant (12), une matière thermoplastique (3) étant disposée entre le premier composant (11) et le deuxième composant (12) sous la forme d'un revêtement, le dispositif de bordage extérieur (1) comportant un palier lisse (4) qui comprend un constituant formé d'un matériau composite à base de fibres,
**caractérisé en ce que**
la matière thermoplastique est appliquée sur l'un des composants (11, 12) et l'autre des composants (11, 12) comportant le constituant formé du matériau composite à base de fibres.

2. Dispositif de bordage extérieur (1) selon la revendication 1, le premier composant (11) étant mobile le long d'une surface de glissement du deuxième composant (12), la matière thermoplastique (3) étant appliquée sur la surface de glissement du deuxième composant (12).

3. Dispositif de bordage extérieur (1) selon la revendication 2, une surface de glissement du premier composant (11) venant en appui sur la matière thermoplastique (3).

4. Dispositif de bordage extérieur (1) selon l'une des revendications précédentes, le premier composant (11) et/ou le deuxième composant (12) comportant au moins partiellement une surface lisse.

5. Dispositif de bordage extérieur (1) selon l'une des revendications précédentes, la matière thermoplastique (3) ayant de préférence une épaisseur inférieure à 1 mm, de manière préférée inférieure à 0,8 mm et de manière particulièrement préférée une épaisseur comprise entre 0,1 et 0,6 mm.

6. Dispositif de bordage extérieur (1) selon l'une des revendications précédentes, la matière thermoplastique (3) ayant une dureté de préférence supérieure à 50 Shore D, de manière préférée supérieure à 65 Shore D et de manière particulièrement préférée supérieure à 70 Shore D, et la matière thermoplastique (3) ayant une dureté de préférence inférieure à 100 Shore D, de manière préférée inférieure à 90 Shore D et de manière particulièrement préférée inférieure à 85 Shore D.

7. Dispositif de bordage extérieur (1) selon l'une des revendications précédentes, la matière thermoplastique (3) étant configurée au moins partiellement en pores clos et/ou électriquement isolante.

8. Dispositif de bordage extérieur (1) selon l'une des revendications précédentes, le deuxième composant (12) étant revêtu de la matière thermoplastique (3), le premier composant (11) comprenant le constituant formé du matériau composite à base fibres ou le premier composant étant fabriqué à partir du matériau composite à base fibres.

9. Dispositif de bordage extérieur (1) selon l'une des revendications précédentes, le composite à base de fibres comprenant une matrice formée d'une résine thermodurcissable et un lubrifiant solide incorporé.

10. Dispositif de bordage extérieur (1) selon l'une des revendications précédentes, le palier lisse (4) étant fabriqué au moins partiellement à partir d'un matériau ayant une dureté supérieure à 50 HRM Rockwell, de préférence supérieure à 65 HRM Rockwell et plus préférablement supérieure à 80 HRM Rockwell, et la dureté étant inférieure à 130 HRM Rockwell, de préférence inférieure à 120 HRM Rockwell et de manière particulièrement préférée inférieure à 115 HRM Rockwell.

11. Dispositif de bordage extérieur (1) selon l'une des revendications précédentes, le dispositif de bordage extérieur (1) comprenant un treuil.

12. Procédé de revêtement d'un dispositif de bordage extérieur (1) selon l'une des revendications précédentes, dans une étape de procédé a, le dispositif de bordage extérieur (1) étant au moins partiellement revêtu de manière à disposer la matière thermoplastique (3) entre le premier composant (11) et le deuxième composant (12).
